# EUROPÄISCHE PATENTSCHRIFT

(11) **EP 0 946 001 B1**
(45) Veröffentlichungstag und Bekanntmachung des Hinweises auf die Patenterteilung: **14.12.2005**
(21) Anmeldenummer: 99101557.9
(22) Anmeldetag: 28.01.1999
(51) Int. Cl.: H04B 7/26, H04Q 7/30

(54) **Verfahren und Funk-Kommunikationssystem zur Übertragung von Sprachinformation**
Method and radio communication system for transmission of speech information
Méthode et système de communication radio pour transmission de voix

(30) Priorität: 05.02.1998 DE 19804581
(43) Veröffentlichungstag der Anmeldung: 29.09.1999
(73) Patentinhaber: SIEMENS AKTIENGESELLSCHAFT, 80333 München (DE)
(72) Erfinder: Östreich, Stefan, Dr., 83607 Holzkirchen (DE)

(56) Entgegenhaltungen:
- WO-A-96/02091
- WO-A-97/15983
- WO-A-97/33402
- DE-A- 19 516 078
- US-A- 5 455 888
- PAULUS J ET AL: "WIDEBAND SPEECH CODING FOR THE GSM FULLRATE CHANNEL?" NTG FACHBERICHTE, VDE VERLAG, BERLIN,, DE, Nr. 139, 17. September 1996 (1996-09-17), Seiten 11-14, XP001025808 ISSN: 0341-0196
- BERLIN F ET AL: "BESSERE SPRACHQUALITAT IM ISDN" TELCOM REPORT, SIEMENS AG. MUNCHEN, DE, Bd. 12, Nr. 4, 1. Juli 1989 (1989-07-01), Seiten 110-113, XP000038746 ISSN: 0344-4724
- YASUKAWA H: "QUALITY ENHANCEMENT OF BAND LIMITED SPEECH BY FILTERING AND MULTIRATE TECHNIQUES" ICSLP 94: 1994 INTERNATIONAL CONFERENCE ON SPOKEN LANGUAGE PROCESSING. YOKOHAMA, JAPAN, SEPT. 18 - 22, 1994, INTERNATIONAL CONFERENCE ON SPOKEN LANGUAGE PROCESSING. (ICSLP), YOKOHAMA: ASJ, JP, Bd. 3, 18. September 1994 (1994-09-18), Seiten 1607-1610, XP000855576

## Beschreibung

Die Erfindung betrifft ein Verfahren und ein Funk-Kommunikationssystem zur Übertragung von Sprachinformation.

Ein Beispiel für ein Funk-Kommunikationssystem ist das zellulare Mobilfunksystem GSM (Global System for Mobile Communication). Bei diesem System wird das Vielfachzugriffsverfahren TDMA (Time Division Multiple Access) benutzt, wobei Mobilstationen durch unterschiedliche Zeitschlitze eines Zeitmultiplexsystems unterschieden werden.

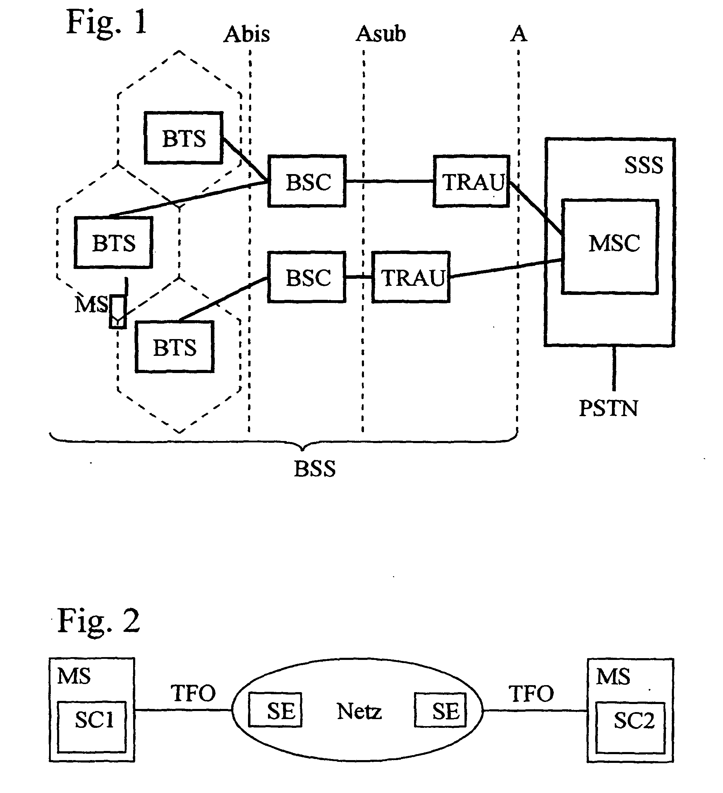

Figur 1 zeigt ein Blockschaltbild eines solchen Mobilfunknetzes, dessen Versorgungsgebiet in mehrere Zellen Z aufgeteilt ist. In einer Zelle Z wird der Telekommunikationsdienst von und zu einer Mobilstation MS durch eine Basisstation BTS bereitgestellt. Ein oder mehrere Basisstationen BTS sind mit einer Basisstationssteuerung BSC verbunden. Die Basisstationssteuerung BSC führt die lokalen Funktionen der Rufvermittlung, Überwachung und Wartung durch. Die Anpassung der Daten des Mobilfunknetzes an ein Fernsprechnetz wird durch eine Transkodiereinheit TRAU durchgeführt.

Die Gesamtheit der Basisstationen BTS, der Basisstationssteuerung BSC und der Transkodiereinheit TRAU wird als Basisstationssystem BSS bezeichnet. Mehrere Basisstationssteuerungen BSC sind mit einer Vermittlungsstelle MSC verbunden, die Bestandteil einer mit einem öffentlichen Fernsprechnetz PSTN verbundenen Vermittlungseinrichtung SSS ist. Das Fernsprechnetz PSTN kann als ISDN-Netz, als weiteres Mobilfunknetz oder als sonstiges Telefon- oder Datennetz ausgebildet sein. Die Schnittstelle zwischen Basisstation BTS und Basisstationssteuerung BSC wird als Abis-Schnittstelle und die Schnittstelle zwischen Basisstationssteuerung BSC und Transkodiereinheit TRAU als Asub-Schnittstelle bezeichnet. Die Übertragung erfolgt drahtgebunden über eine PCM24- oder eine PCM30-Strecke.

Bei einer Übertragung von Sprache zu oder von einer Mobilstation ist es allgemein bekannt, auf der Sendeseite analoge Sprachinformationen abzutasten und in einem Sprachkodierer in digital kodierte Sprachinformationen umzusetzen und diese gegebenenfalls fehlergesichert zu übertragen. Auf der Empfangsseite wird die digital kodierte Sprachinformation dann wieder in analoge Sprachinformationen umgesetzt.

Im oben genannten Mobilfunknetz GSM, das im folgenden nur zur Darstellung des technischen Hintergrundes der Erfindung dient ohne die Allgemeinheit ihres Einsatzes einzuschränken, führt wie aus DE 196 47 630 bekannt, die Transkodiereinheit TRAU die Anpassung der Datenrate, welche vom Fernsprechnetz PSTN übermittelt werden, an die im Mobilfunknetz definierten Datenrate durch. Eine Sprachkodierung wird sowohl in der Mobilstation MS als auch in der Transkodiereinheit TRAU durchgeführt. Eine Kanalkodierung wird üblicherweise für eine Funkübertragung zwischen Mobilstation MS und Basisstation BTS durchgeführt.

Das Dokument WO 97/15983 beschreibt ein Verfahren zum "embedded coding" für Audio-Daten, bei dem eine Codierung in mehreren Stufen stattfindet. Für die einzelnen Codiereinheiten können verschiedene Codieralgorithmen eingesetzt werden. Die Entscheidung darüber, welche Codieralgorithmen für die erste bzw. die weiteren Codierstufen verwendet werden, hängt ab von einer Klassifikation der Daten, von Konfigurationsinformation des Nutzers und von Kontrollinformation des Übertragungssystems.

Das Dokument WO 96/02091 A1 beschreibt ein Verfahren zur Kommunikation per Funk, bei dem senderseitig eine Mehrzahl an Sprachkodierern vorhanden sind. Die verschiedenen Sprachkodierer bringen kodierte Sprache mit unterschiedlichen Übertragungsraten hervor. Die Auswahl des Sprachkodierverfahrens kann abhängig von der Fehlerhaftigkeit des Übertragungskanals gewählt werden. Die Qualität des Übertragungskanals kann während einer Verbindung überprüft werden und das Sprachkodierverfahren kann entsprechend gewechselt werden.

Bei der Einführung von Funk-Kommunikationssystemen der 3. Generation (UMTS) ist es vorgesehen, daß über die in der Fernsprechtechnik übliche Bandbreite von 300 Hz bis 3,4 kHz hinaus, breitbandig Sprachinformation übertragbar sein soll. Damit soll die bisher eingesetzte schmalbandige Übertragung ersetzt und die Sprachqualität verbessert werden. Bei bisherigen schmalbandigen Übertragungsverfahren ist es aus M. Abe und Y. Yoshide, "More Natural Sounding Voice Quality Over the Telephone", NTT Review, Vol.7, Nr.3, Mai 1995, S.104-109 bekannt, empfangsseitig eine künstliche Bandbreitenerweiterung durchzuführen, um einen natürlicheren Sprachklang nachzuempfinden. Diese beschriebene Bandbreitenerweiterung wird hierbei ständig angewendet und soll unabhängig von den Gegebenheiten des Endgerätes sein, siehe S.105 unten bis S.106 oben.

Weitere Verfahren zur empfängerseitigen Bandbreitenerweiterung sind beschrieben in den Dokumenten US 5,455,888 und J. Paulus, J. Schnitzler: "Wideband Speech Coding For The GSM Fullrate Channel?", XP-001025808, Ntg Fachberichte, Vde Verlag, Berlin.

Der Erfindung liegt die Aufgabe zugrunde, ein Verfahren und ein Funk-Kommunikationssystem zur Übertragung von Sprachinformation anzugeben, die bezüglich der Sprachkodierung/-dekodierung den veränderlichen Übertragungsbedingungen entsprechen können. Diese Aufgabe wird durch das Verfahren nach den Merkmalen des Patentanspruchs 1 und das Funk-Kommunikationssystem nach den Merkmalen des Patentanspruches 12 gelöst. Weiterbildungen der Erfindung sind den Unteransprüchen zu entnehmen.

Beim erfindungsgemäßen Verfahren zur Übertragung von Sprachinformation in einem Funk-Kommunikationssystem werden in einer Mobilstation bzw. in einer Transkodiereinheit angeordnete Sprachkodierer/-dekodierer vorausgesetzt, durch die zumindest ein breitbandiges und ein schmalbandiges Sprachkodierverfahren ausgewählt werden können. Weiterhin wird für eine Verbindung zur Mobilstation eine Überwachung von Übertragungsbedingungen über eine Funkschnittstelle durchgeführt und bei eingeschränkten Übertragungsbedingungen über die Funkschnittstelle vom breitbandigen auf das schmalbandige Sprachkodierverfahren umgeschaltet, d.h. die Sprachinformation schmalbandig über zumindest Teile eines Übertragungskanals zwischen den Sprachkodierern/dekodierern übertragen. Das breitbandige Sprachkodierverfahren erfordert eine hohe Netto-Datenrate, die mit ausreichendem Fehlerschutz unter diesen Übertragungsbedingungen nicht mehr gegeben ist.

Ein schmalbandiges Sprachkodierverfahren führt jedoch empfangseitig zu einem anderen Sprachempfinden, wobei besonders das Umschalten zu unerwünschten und störenden Klangänderungen führt. Erfindungsgemäß wird empfangsseitig die nunmehr empfangene schmalbandige Sprachinformation auf eine größere Bandbreite erweitert. Durch die Überbrückung dieses Umschalteffektes verbessert sich der subjektive Spracheindruck. Dies gilt insbesondere für kurze Umschaltphasen vom breitbandigen auf das schmalbandige Sprachkodierverfahren. Schließlich wird von dem schmalbandigen wieder auf das breitbandige Sprachkodierverfahren umgeschaltet und die Bandbreitenerweiterung wird beendet.

Nach einer vorteilhaften Weiterbildung der Erfindung sieht das ausgewählte schmalbandige Sprachkodierverfahren einen höheren Kodierschutz als das breitbandige Sprachkodierverfahren vor. Somit wird für den in Funk-Kommunikationssystemen häufigen Fall kurzzeitiger Signaleinbrüche, die Übertragung garantiert und beim Hörer der zuvor empfundene subjektive Spracheindruck aufrechterhalten.

Vorteilhafterweise wird die Sprachkodierung für die Verbindung in einem TFO-Modus durchgeführt und damit die Umschaltung für beide an der Verbindung beteiligten Vorrichtungen, sei es eine Mobilstation, ein anderes Endgerät oder eine Transkodiereinheit, durchgeführt. Der TFO-Modus (tandem free operation) ersetzt eine netzseitige Sprachkodierung/-dekodierung, z.B. in der Transkodiereinheit TRAU, durch eine transparente Übertragung der sprachkodierten Sprachinformationen von Endgerät zu Endgerät. Durch die Transparenz des TFO-Modus muß auch bei Übertragungsstörungen eine Anpassung für beide Übertragungen erfolgen. Jedoch ist es ebenso möglich, daß ein Ausfall des TFO-Modus die Störung darstellt und netzseitig auf eine PCM-Übertragung umgeschaltet werden muß. Auch für diesen Fall führt das erfindungsgemäße Verfahren zu dem verbesserten Spracheindruck in der Umschaltphase.

Ein weiterer häufig auftretender Störeinfluß ist ein Handover-Vorgang während des TFO-Modus. Dabei wird u.U. der TFO-Modus kurzzeitig unterbrochen und es muß auf eine schmalbandige Sprachkodierung umgeschaltet werden, bis der TFO-Modus wiederhergestellt ist.

Dauert die Störung länger, z.B. länger als 5 s, so ist es vorteilhaft, die Bandbreitenerweiterung der empfangenen schmalbandigen Sprachinformation schrittweise zu reduzieren. Damit wird der Übergang für eine nachfolgende schmalbandige Übertragung geglättet. Die Bandbreitenerweiterung kann damit schrittweise reduziert oder durch eine digitale Filterung unterdrückt werden. Diese Einstellungen können empfängerindividuell vorgenommen werden.

Nach einer vorteilhaften Ausprägung der Erfindung ist der Sprachkodierer/-dekodierer in Module für zumindest zwei Frequenzbereiche untergliedert, so daß durch Auswahl ein oder mehrerer Module das breitbandige bzw. schmalbandige Sprachkodierverfahren bestimmt wird. Diese Module sind leicht hinzufügbar bzw. entfernbar, so daß der Sprachkodierer/-dekodierer durch einfache Parametrierung an die Übertragungsbedingungen angepaßt werden kann.

Weiterhin liegt es im Rahmen der Erfindung, daß der Sprachkodierer/-dekodierer zwei breitbandige Sprachkodierverfahren vorsieht, d.h. die Bandbreite ist größer als 300 Hz bis 3,4 kHz, wobei das schmalbandigere der zwei Sprachkodierverfahren im höheren Frequenzbereich stärker begrenzt ist. Aber bereits ein Hinzufügen der niedrigeren Frequenzen verbessert das Klangempfinden. Zusätzlich hat dies den Vorteil, daß z.B. 50 Hz bis 3,4 kHz PCM-kodiert übertragen werden können. Die höheren Frequenzen werden bei einer Bandbreitenerweiterung zusätzlich künstlich erzeugt.

Im folgenden wird die Erfindung bezugnehmend auf zeichnerische Darstellungen anhand von Ausführungsbeispielen näher erläutert.

Dabei zeigen
- Fig. 1: ein Mobilfunknetzes,
- Fig. 2: die Sprachübertragung über ein Möbilfunknetz,
- Fig. 3: die Sprachübertragung im TFO-Modus,
- Fig. 4: die Sprachübertragung ohne TFO-Modus,
- Fig. 5: verschiedene Möglichkeiten für einen Einsatzes des erfindungsgemäßen Verfahrens,
- Fig. 6: eine Mobilstation,
- Fig. 7: einen Sprachkodierer/-dekodierer mit mehreren Kodierverfahren, und
- Fig. 8: unterschiedliche Übertragungsverfahren für Sprachinformation.

Beim in Fig. 1 dargestellten und eingangs beschriebenen Mobilfunknetz handelt es sich beispielsweise um ein GSM-Mobilfunksystem (oder ein DCS-1800 und ein PCS-1900 System), über das Sprachinformationen und Daten von und zu Mobilfunkteilnehmern - Mobilstationen MS - übertragen werden können. Ebenso ist die Erfindung in Funk-Kommunikationssystemen der 3. Generation anwendbar.

Der deutschen Patentschrift P 44 16 407 kann die Funktionsweise der Sprachkodierung und Dekodierung, sowie der Sprachübertragung entnommen werden. TRAU-Rahmen transportieren die sprachkodierten Sprachinformationen mit einer Sprachdauer von 20 msec.

In Fig. 2 ist die Sprachübertragung zwischen zwei Mobilstationen MS mit Sprachkodierern/-dekodierern SC1, SC2 über ein Mobilfunknetz schematisch dargestellt. Die Sprachkodierer/-dekodierer SC1, SC2 enthalten später dargestellte Module für eine breitbandige und schmalbandige Sprachübertragung, zwischen denen umgeschaltet werden kann. Es wird davon ausgegangen, daß für eine Verbindung zu einer Mobilstation MS das breitbandige Sprachkodierverfahren BSCV ausgewählt wurde.

Die breitbandige Übertragung von Sprachinformationen erfolgt mit einem TFO-Modus, d.h. es erfolgt keine Sprachdekodierung für die Übertragung im Netz. Da das breitbandige Sprachkodierverfahren BSCV eine höhere Abtastrate als ein schmalbandiges Sprachkodierverfahren SSCV erfordert, kann die breitbandige Sprachinformation nicht PCM-kodiert (G.711 A/µ-law, 8 kHz Abtastrate) über das Netz übertragen werden. Der TFO-Modus definiert ein eigenes Übertragungsverfahren im Netz.

Netzseitig sind Steuereinrichtungen SE vorgesehen, die die Übertragungsmöglichkeiten überwachen. Diese Steuereinrichtungen SE sind beispielsweise in den Basisstationssteuerungen BSC integriert. Die Steuereinrichtung SE bestimmt Parameter bezüglich der Übertragungsmöglichkeiten für eine Verbindung zu einer Mobilstation MS. Durch einen Vergleich dieser Parameter, z.B. Vergleich der Bitfehlerrate mit einem Schwellwert, wird eine verschlechterte Übertragungsqualität für die Funkschnittstelle zwischen Mobilstation MS und Basisstation BTS festgestellt.

Eine zusätzliche bzw. alternative Funktionalität der Steuereinrichtung SE besteht darin, Unterbrechungen in der TFO-Übertragung, durch Handover-Vorgänge bedingte Engpässe bei der Übertragung oder Engpässe bei der Zuweisung von funktechnischen Ressourcen festzustellen. Auch durch diese Einflüsse sind die Übertragungsmöglichkeiten eingeschränkt. Falls ein Umschalten in einem Half-Rate-Modus nötig ist, soll ebenfalls ein schmalbandiges Sprachkodierverfahren SSCV gewählt werden.

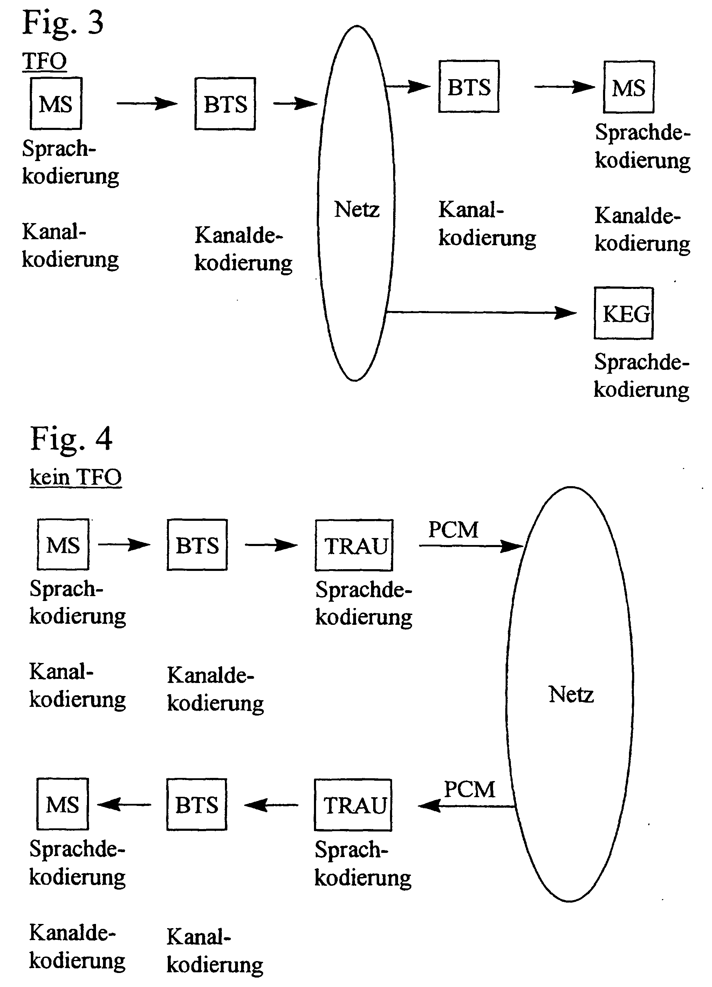

Fig. 3 zeigt eine Übertragungsrichtung der Üblicherweise als Duplexverbindung ausgeprägten Sprachübertragung für den TFO-Modus, bei dem in einer Mobilstation MS eine Sprachkodierung und eine Kanalkodierung vor dem Senden der Sprachinformationen zur Basisstation BTS durchgeführt wird. In der Basisstation BTS findet eine Kanaldekodierung statt worauf die noch immer sprachkodierten Sprachinformation über das Netz zu einer Basisstation BTS für den zweiten Teilnehmer vermittelt wird. Im Funkbereich dieser Basisstation BTS befindet sich eine zweite Mobilstation MS. Die Basisstation BTS führt die Kanalkodierung für die anschließende Funkübertragung durch, worauf in der zweiten Mobilstation MS eine Kanaldekodierung und eine Sprachdekodierung ausgeführt werden. Ist der zweite Teilnehmer keine Mobilstation, sondern beispielsweise ein ISDN-Endgerät KEG, so wird auf eine erneute Kanalkodierung/dekodierung verzichtet.

Für eine Übertragung ohne TFO-Modus, siehe Fig. 4, wird vor einer netzseitigen Vermittlung in der Transkodiereinheit TRAU eine Sprachdekodierung durchgeführt und die Sprachinformationen PCM-kodiert übertragen. Nach der Vermittlung wird im Falle eines mobilen zweiten Teilnehmers eine entsprechende Sprachkodierung wiederum in einer Transkodiereinheit TRAU vorgenommen.

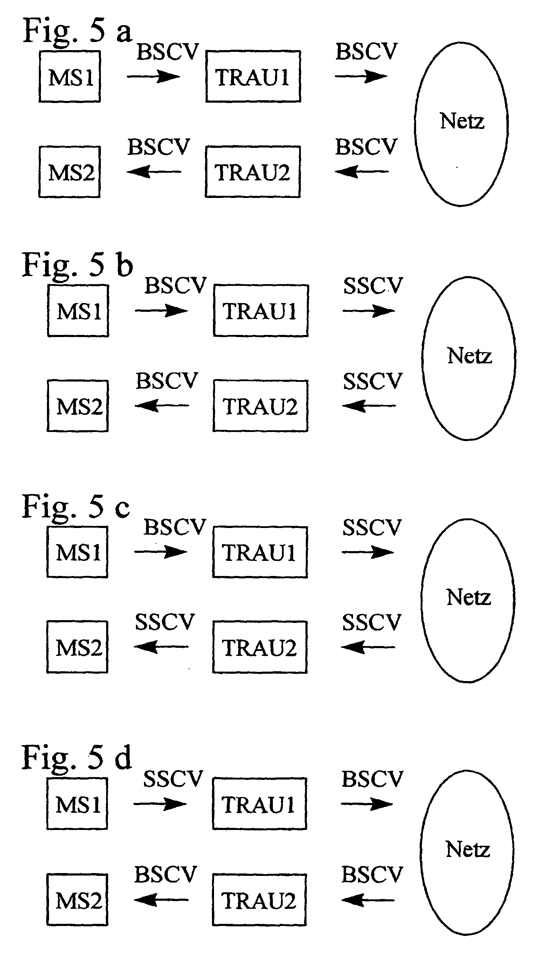

Fig. 5a zeigt den Fall der TFO-Übertragung mit breitbandiger Sprachkodierung BSCV von Mobilstation MS1 zu Mobilstation MS2, wobei in den Transkodiereinheiten TRAU1 und TRAU2 keine erneute Sprachkodierung durchgeführt wird.

Fällt der TFO-Modus im Netz aus, ergibt sich das Bild nach Fig. 5b. Zwischen den Transkodiereinheiten TRAU1 und TRAU2 erfolgt die Sprachübertragung schmalbandig. Für die in Fig. 5b gezeigte Übertragungsrichtung wird in der Transkodiereinheit TRAU1 die breitbandige Sprachinformation durch Filterung in der Bandbreite reduziert und nach der schmalbandigen Übertragung erfolgt in der Transkodiereinheit TRAU2 die Bandbreitenerweiterung, so daß die Mobilstation MS2 bereits breitbandige Sprachinformation empfängt. Die Bandbreitenreduzierung bzw. -erweiterung kann jedoch auch schrittweise eingeleitet werden.

Bei länger andauerndem Ausfall des TFO-Modus kann die Bandbreitenerweiterung in der Transkodiereinheit TRAU2 schrittweise reduziert und schließlich zwischen Mobilstation MS1 und Transkodiereinheit TPAU1 und/oder zwischen Mobilstation MS2 und Transkodiereinheit TRAU2 auf ein zweites schmalbandigeres Breitband-Sprachkodierverfahren BSCV umgeschaltet werden. Dieses zweite schmalbandigere Breitband-Sprachkodierverfahren BSCV hat vorteilhafterweise einen zu tiefen Frequenzen hin erweiterten Frequenzbereich, d.h. mit diesem speziellen breitbandigen Sprachkodierverfahren BSCV kann Sprachinformation PCM-kodiert gemäß G.711 über existierende Netze übertragen werden.

Eine Verringerung der Umschaltstörung tritt bereits ein, wenn in der Transkodiereinheit TRAU2 keine erneute Bandbreitenerweiterung vorgenommen wird.

Verschlechtern sich die Übertragungsbedingungen für die Funkschnittstelle, so erfolgt die Übertragung zwischen Mobilstation MS1 und Transkodiereinheit TRAU1 nach Fig. 5c bzw. zwischen Transkodiereinheit TRAU2 und Mobilstation MS2 nach Fig. 5d nach einem schmalbandigen Sprachkodierverfahren SSCV. Die Bandbreitenerweiterung erfolgt jeweils am empfangenden Ende des Teils des Übertragungskanals mit eingeschränkten Übertragungsmöglichkeiten. Ausgehend von der Situation in Fig. 5d kann die schmalbandige Übertragung zusätzlich die Übertragung zwischen den Transkodiereinheiten TRAU1 und TRAU2 und letztlich auch von der Transkodiereinheit TRAU2 zur Mobilstation MS2 erfassen. In der Regel ist die Umschaltung nach Fig. 5d sofort mit einer Umschaltung zwischen den Transkodiereinheiten TRAU1 und TRAU2 auf ein schmalbandiges Transkodierverfahren SSCV verbunden. Die Bandbreitenerweiterung würde damit entweder in der Transkodiereinheit TRAU2 oder gar erst in der Mobilstation MS2 erfolgen.

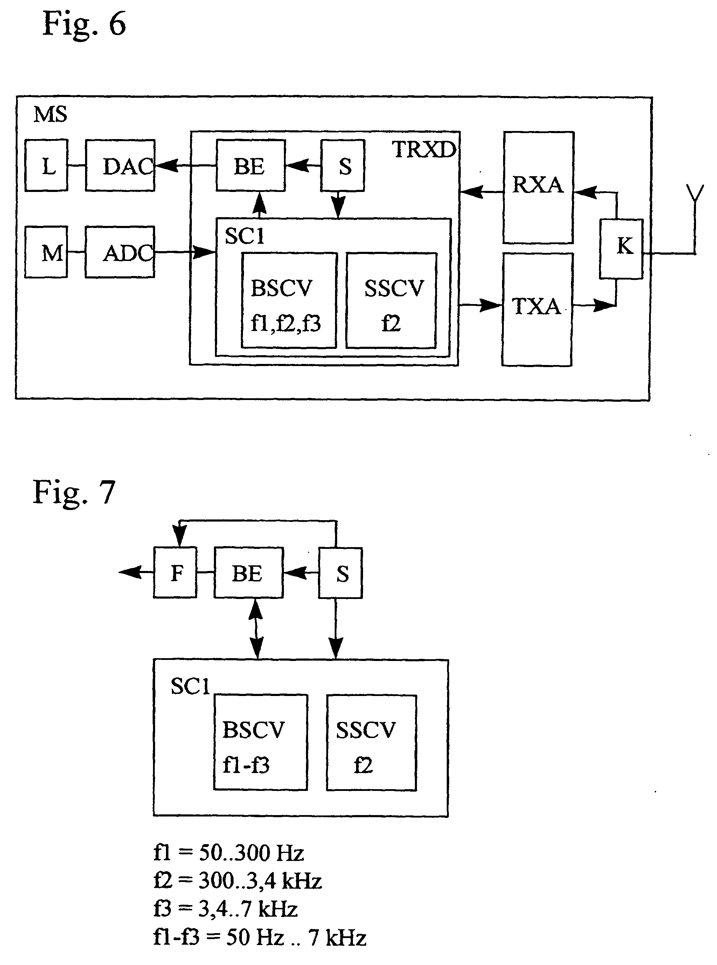

Eine erfindungsgemäße Mobilstation MS ist in Fig. 6 dargestellt. Sie enthält einen Lautsprecher L, einen Digital/Analog-Wandler DAC, ein Mikrofon und einen Analog/Digital-Wandler ACD. Durch diese Baugruppen L, M, ADC, DAC ist die Sprachein/-ausgabe mit einem Digitalteil TRXD verbunden, der neben einer nicht gezeigten Basisbandverarbeitung eine Sprachkodierung/-dekodierung durchführt. Dazu enthält das Digitalteil TRXD einen Sprachkodierer/-dekodierer SC1, der Module BSCV, SSCV zur breitbandigen bzw. schmalbandigen Sprachkodierung/-dekodierung bereithält, zwischen denen umgeschaltet werden kann. Eine Baugruppe der Transkodiereinheit TRAU, TRAU1, TRAU2 korrespondiert mit dem Digitalteil TRXD und führt dort eine Sprachkodierung/-dekodierung durch.

Im folgenden wird für die Mobilstation MS nur der Empfangsfall, d.h. die Dekodierung betrachtet. Für die breitbandige Sprachdekodierung BSCV sind drei Module vorgesehen, die die Frequenzbereiche f1=50 bis 300 Hz, f2=300 Hz bis 3,4 kHz und f3= 3,4 kHz bis 7 kHz abdecken. Für die schmalbandige Sprachdekodierung SSCV wird nur ein Modul f2=300 Hz bis 3,4 kHz benötigt. Eine schmalbandigere Breitband-Übertragung ist ebenso möglich, wenn nur die Module f1 und f2 benutzt werden. Weiterhin enthält der Sprachkodierer/-dekodierer SC1 eine Einrichtung BE zur Bandbreitenerweiterung und eine Steuerung S. Deren Funktionen werden bezugnehmend auf Fig.7 näher erläutert.

Das Digitalteil TRXD ist mit analogen Empfangs- RXA und Sendeeinrichtungen TXA verbunden, die wiederum über einen Duplexer K an eine Antenne angeschlossen sind. In den Empfangs-RXA und Sendeeinrichtungen TXA wird eine Verstärkung, Filterung und Mischung der Empfangs- und Sendesignale durchgeführt.

Im Sprachdekodierer SC1 nach Fig. 7 wird im Zuge, d.h. vor, nach oder während, einer Sprachdekodierung von schmalbandigen Sprachinformationen eine Bandbreitenerweiterung in der Einrichtung BE durchgeführt, wobei beispielsweise ein Algorithmus nach M. Abe und Y. Yoshide, "More Natural Sounding Voice Quality Over the Telephone", NTT Review, Vol.7, Nr.3, Mai 1995, S.104-109, verwendet wird. Entsprechendes gilt für die entgegengesetzte Übertragungsrichtung.

Anschließend an die Bandbreitenerweiterung wird eine Filterung in einem digitalen Filter F vorgenommen, die die Bandbreitenerweiterung schrittweise auf die Bandbreite der schmalbandigen Übertragung zurückführt. Dies ist eine Option, die bei längeren Einschränkungen der Übertragungsmöglichkeiten benutzt wird, und zudem auch durch eine Adaption innerhalb der Banderweiterungsalgorithmus ersetzt werden kann.

Das Umschalten zwischen breit- und schmalbandiger Übertragung wird durch die Steuerung S ausgelöst, die die Übertragungsmöglichkeiten und Parameter der Übertragungsbedingungen auswertet bzw. durch eine netzseitige Signalisierung dazu veranlaßt wird. Die Steuerung S bewirkt ferner die Anpassung des Banderweiterungsalgorithmus bzw. die Parametrierung des digitalen Filters F. Auch eine Auswahl der Module f1, f2, f3 für die breitbandige BSCV und schmalbandige SSCV Sprachkodierung/-dekodierung wird durch die Steuerung S veranlaßt.

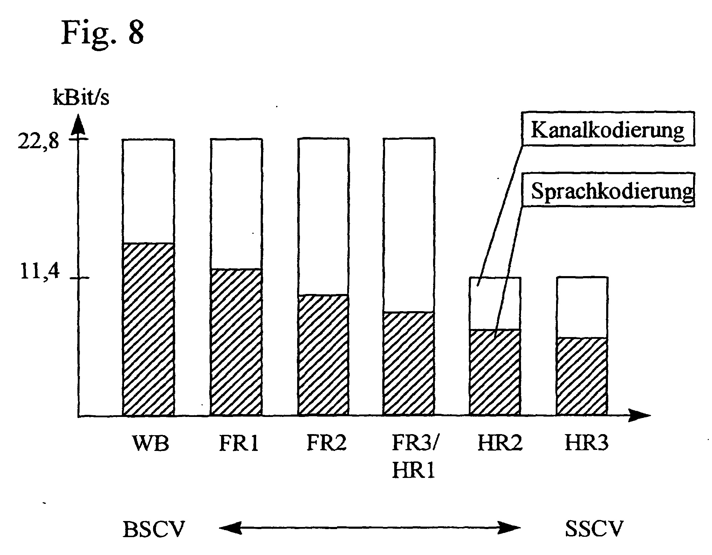

Breitbandig und schmalbandig sind relative Begriffe, die gemäß Fig. 8 auf eine Mehrzahl unterschiedlicher Sprachkodierungen, siehe auch J. Biala, "Mobilfunk und intelligente Netze", Vieweg Verlag, 1995, S.96-102, bezogen werden können, wobei für die breitbandigere Übertragung innerhalb der Datenrate der Funkschnittstelle von beispielsweise 22,8 oder 11,4 kBit/s vorzugsweise ein höherer Anteil für die Sprachkodierung vorzusehen ist. Aus der Kombination von Sprachkodierung und Kanalkodierung ergeben sich für die Datenraten von 22,8 oder 11,4 kBit/s unterschiedliche Verhältnis von Schutzbits zu Nutzbits, d.h. ein unterschiedlicher Kodierschutz. Bei gleicher Brutto-Datenrate ist ein schmalbandiges Verfahren störresistenter und wird bei schlechten Übertragungsbedingungen gewählt.

Um für kurzzeitige Störungen, wie z.B. bei Funkabschattungseffekten oder bei kurzzeitigem Ausfall des TFO-Modus, z.B. durch Handover, den Klangeindruck der breitbandigen Übertragung beim Hörer aufrechtzuerhalten, wird die Bandbreitenerweiterung der nach dem Umschalten nur schmalbandig empfangenen Sprachinformationen durchgeführt. Bei längeren Störungen wird die Bandbreitenerweiterung schrittweise auf die Bandbreite der schmalbandigen Übertragung reduziert. Damit wird insbesondere bei der Einführung von adaptiven Multiratenkodierern (AMR) dem Hörer eine verbesserte Sprachqualität garantiert, die auch beim Mobilfunk mit seinen schnell veränderlichen Kanalbedingungen wirksam ist.

## Patentansprüche

1. Verfahren zur Übertragung von Sprachinformation in einem Funk-Kommunikationssystem mit zumindest zwei in Mobilstationen (MS) bzw. netzseitig angeordneten Sprachkodierer/-dekodierern (SC1, SC2), die durch einen Übertragungskanal getrennt sind, bei dem
- durch die Sprachkodierer/-dekodierer (SC1, SC2) zumindest ein breitbandiges (BSCV) und ein schmalbandiges (SSCV) Sprachkodierverfahren auswählbar ist,
- für eine Verbindung zur Mobilstation (MS) eine Überwachung der Übertragungsbedingungen über eine Funkschnittstelle durchgeführt wird,
- bei eingeschränkten Übertragungsbedingungen über die Funkschnittstelle für zumindest Teile des Übertragungskanals vom breitbandigen (BSCV) auf das schmalbandige (SSCV) Sprachkodierverfahren umgeschaltet wird,
**dadurch gekennzeichnet,**
- **dass** die derartig übertragene schmalbandige Sprachinformation empfangsseitig auf eine größere erweitert wird, und
- von dem schmalbandigen (SSCV) wieder auf das breitbandige (BSCV). Sprachkodierverfahren umgeschaltet wird und die empfangsseitige Bandbreitenerweiterung beendet wird.

2. Verfahren nach Anspruch 1, bei dem
das ausgewählte schmalbandige Sprachkodierverfahren (SSCV) einen höheren Kodierschutz als das breitbandige Sprachkodierverfahren (BSCV) vorsieht.

3. Verfahren nach einem der vorherigen Ansprüche, bei dem die Bandbreitenerweiterung in einer Mobilstation (MS) oder einer Transkodiereinheit (TRAU1, TRAU2) erfolgt.

4. Verfahren nach einem der vorherigen Ansprüche, bei dem die Umschaltung für beide durch die eingeschränkten Übertragungsmöglichkeiten des Übertragungskanals der Verbindung betroffenen Vorrichtungen (MS, KEG, TRAU) durchgeführt wird.

5. Verfahren nach einem der vorherigen Ansprüche, bei dem die Auswahl des Sprachkodierverfahrens (BSCV, SSCV) und die Bandbreitenerweiterung der empfangenen schmalbandigen Sprachinformation bei einem Handover-Vorgang eingeleitet wird.

6. Verfahren nach einem der vorherigen Ansprüche, bei dem die Auswahl des Sprachkodierverfahrens (BSCV, SSCV) und die Bandbreitenerweiterung der empfangenen schmalbandigen Sprachinformation bei schnell veränderlichen Übertragungsmöglichkeiten eingeleitet wird.

7. Verfahren nach einem der vorherigen Ansprüche, bei dem die Bandbreitenerweiterung der empfangenen schmalbandigen Sprachinformation schrittweise reduziert wird.

8. Verfahren nach einem der vorherigen Ansprüche, bei dem empfangsseitig die Bandbreite durch eine digitale Filterung reduziert wird.

9. Verfahren nach Anspruch 7 oder 8, bei dem die Bandbreitenerweiterung bis zur Bandbreite der schmalbandigen Sprachinformation verringert wird.

10. Verfahren nach einem der vorherigen Ansprüche, bei dem zumindest ein Sprachkodierer/-dekodierer (SC1, SC2) in Module für zumindest zwei Frequenzbereiche (f1, f2, f3) untergliedert ist und durch Auswahl ein oder mehrerer Module das breitbandige (BSCV) bzw. schmalbandige (SSCV) Sprachkodierverfahren bestimmt wird.

11. Verfahren nach einem der vorherigen Ansprüche, bei dem der Sprachkodierer/-dekodierer (SC1, SC2) zwei breitbandige (BSCV) Sprachkodierverfahren vorsieht, wobei das schmalbandigere der beiden Sprachkodierverfahren (BSCV) derartig frequenzbegrenzt ist, daß die Sprachinformation PCM-kodiert übertragen wird.

12. Funk-Kommunikationssystem zur Übertragung von Sprachinformation,
mit Mobilstationen (MS), die einen Sprachkodierer/-dekodierer (SC1) aufweisen,
mit zumindest einer Transkodiereinheit (TRAU), die einen Sprachkodierer/-dekodierer (SC2) aufweist,
wobei zumindest einer der Sprachkodierer/-dekodierer (SC1, SC2) so ausgestaltet ist, dass zumindest ein breitbandiges (BSCV) und ein schmalbandiges (SSCV) Sprachkodierverfahren ausgewählt werden kann,
mit einer Steuereinrichtung (SE) zum Überwachen von Übertragungsbedingungen über eine Funkschnittstelle für einen Übertragungskanal zwischen den Sprachkodierer/-dekodierern (SC1, SC2),
mit Mitteln zum Umschalten bei eingeschränkten Übertragungsbedingungen über die Funkschnittstelle für zumindest Teile des Übertragungskanals vom breitbandigen (BSCV) auf das schmalbandige (SSCV) Sprachkodierverfahren,
**gekennzeichnet durch**
eine Einrichtung zur Bandbreitenerweiterung (BE), die empfangsseitig die derartig übertragene schmalbandige Sprachinformation auf eine größere Bandbreite erweitert, und
Mittel zum Zurückschalten von dem schmalbandigen (SSCV) auf das breitbandige (BSCV) Sprachkodierverfahren und zum Beenden der empfangsseitigen Bandbreitenerweiterung.

13. Funk-Kommunikationssystem nach Anspruch 12, bei dem die Einrichtung zur Bandbreitenerweiterung (BE) in der Mobilstation (MS) und/oder der Transkodiereinheit (TRAU) angeordnet ist.

14. Funk-Kommunikationssystem nach Anspruch 12 oder 13, bei dem der Einrichtung zur Bandbreitenerweiterung (BE) ein Filter (F) zugeordnet ist.

## Claims

1. Method for transmitting voice information in a radio communication system with at least two voice coders/decoders (SC1, SC2) arranged in mobile stations (MS) or on the network side and separated by a transmission channel, with which
- at least one broadband (BSCV) and one narrowband (SSCV) voice coding method can be selected by the voice coder/decoder (SC1, SC2),
- the transmission conditions across a radio interface are monitored for a connection to the mobile station (MS),
- if transmission conditions across the radio interface are restricted, a switch is made from the broadband (BSCV) to the narrowband (SSCV) voice coding method for at least parts of the transmission channel,
**characterised in that**
- the narrowband voice information thus transmitted is expanded on the receive side to a larger bandwidth and
- a switch is made from the narrowband (SSCV) back to the broadband (BSCV) voice coding method and the bandwidth expansion on the receive side is terminated.

2. Method according to claim 1,
with which the selected narrowband voice coding method (SSCV) provides a higher level of coding protection than the broadband voice coding method (BSCV).

3. Method according to one of the preceding claims,
with which bandwidth expansion takes place in a mobile station (MS) or a transcoding unit (TRAU1, TRAU2).

4. Method according to one of the preceding claims,
with which switching is carried out for both the devices (MS, KEG, TRAU) affected by the restricted transmission options of the transmission channel of the connection.

5. Method according to one of the preceding claims,
with which selection of the voice coding method (BSCV, SSCV) and bandwidth expansion of the received narrowband voice information are initiated during a handover procedure.

6. Method according to one of the preceding claims,
with which selection of the voice coding method (BSCV, SSCV) and bandwidth expansion of the received narrowband voice information are initiated in the event of fast-changing transmission options.

7. Method according to one of the preceding claims,
with which the bandwidth expansion of the received narrowband voice information is reduced gradually.

8. Method according to one of the preceding claims,
with which the bandwidth is reduced by digital filtering on the receive side.

9. Method according to claim 7 or 8,
with which the bandwidth expansion is reduced to the bandwidth of the narrowband voice information.

10. Method according to one of the preceding claims,
with which at least one voice coder/decoder (SC1, SC2) is divided into modules for at least two frequency ranges (f1, f2, f3) and the broadband (BSCV) or narrowband (SSCV) voice coding method is defined by selecting one or more modules.

11. Method according to one of the preceding claims,
with which the voice coder/decoder (SC1, SC2) provides two broadband voice coding methods (BSCV), with the frequency of the narrower-band voice coding method (BSCV) of the two being limited such that the voice information is transmitted with PCM coding.

12. Radio communication system for the transmission of voice information,
with mobile stations (MS), having a voice coder/decoder (SC1), with at least one transcoder unit (TRAU), having a voice coder/decoder (SC2),
with at least one of the voice coders/decoders (SC1, SC2) being configured such that at least one broadband (BSCV) and one narrowband (SSCV) voice coding method can be selected, with a control device (SE) to monitor transmission conditions across a radio interface for a transmission channel between the voice coders/decoders (SC1, SC2),
with means for switching from the broadband (BSCV) to the narrowband (SSCV) voice coding method for at least parts of the transmission channel, if transmission conditions across the radio interface are restricted,
**characterised by**
a device for bandwidth expansion (BE) which expands the narrowband voice information thus transmitted to a larger bandwidth on the receive side and
means for switching back from the narrowband (SSCV) to the broadband (BSCV) voice coding method and for terminating the bandwidth expansion on the receive side.

13. Radio communication system according to claim 12, with which the device for bandwidth expansion (BE) is arranged in the mobile station (MS) and/or the transcoding unit (TRAU).

14. Radio communication system according to claim 12 or 13, with which a filter (F) is assigned to the device for bandwidth expansion (BE).

## Revendications

1. Procédé pour la transmission d'information vocale dans un système de radiocommunication avec au moins deux codeurs/décodeurs de parole (SC1, SC2) disposés dans des stations mobiles (MS) ou côté réseau, qui sont séparés par un canal de transmission, dans lequel
- au moins un procédé de codage de parole à large bande (BSCV) et un procédé de codage de parole à bande étroite (SSCV) peut être sélectionné par les codeurs/décodeurs de parole (SC1, SC2),
- un contrôle des conditions de transmission via une interface radio est effectué pour une liaison avec la station mobile (MS),
- en cas de conditions de transmission restreintes, on commute via l'interface radio pour au moins des parties du canal dé transmission du procédé de codage de parole à large bande (BSCV) au procédé de codage de parole à bande étroite (SSCV),
**caractérisé en ce que**
- l'information vocale à bande étroite transmise de cette façon est élargie côté réception à une largeur de bande plus grande et
- on commute du procédé de codage de parole à bande étroite (SSCV) de nouveau au procédé de codage de parole à bande large (BSCV) et l'extension de largeur de bande côté réception est terminée.

2. Procédé selon la revendication 1, dans lequel
le procédé de codage de parole à bande étroite (SSCV) choisi prévoit une protection de codage plus élevée que le procédé de codage de parole à bande large (BSCV).

3. Procédé selon l'une quelconque des revendications précédentes, dans lequel
l'extension de largeur de bande s'effectue dans une station mobile ou dans une unité de transcodage (TRAU1, TRAU2).

4. Procédé selon l'une des revendications précédentes, dans lequel
la commutation est effectuée pour les deux dispositifs (MS, KEG, TRAU) concernés par les possibilités de transmission restreintes du canal de transmission de la liaison.

5. Procédé selon l'une des revendications précédentes, dans lequel
le choix du procédé de codage de parole (BSCV, SSCV) et l'extension de la largeur de bande de l'information vocale à bande étroite reçue sont entamés lors d'une opération handover.

6. Procédé selon l'une des revendications précédentes, dans lequel
le choix du procédé de codage de parole (BSCV, SSCV) et l'extension de la largeur de bande de l'information vocale à bande étroite reçue sont entamés en cas de possibilités de transmission variables rapidement.

7. Procédé selon l'une des revendications précédentes, dans lequel
l'extension de la largeur de bande de l'information vocale à bande étroite reçue est réduite de façon progressive.

8. Procédé selon l'une des revendications précédentes, dans lequel
la largeur de bande est réduite côté réception par un filtrage numérique.

9. Procédé selon la revendication 7 ou 8, dans lequel
l'extension de la largeur de bande est réduite jusqu'à la largeur de bande de l'information vocale à bande étroite.

10. Procédé selon l'une des revendications précédentes, dans lequel
au moins un codeur/décodeur de parole (SC1, SC2) est subdivisé en modules pour au moins deux plages de fréquences (f1, f2, f3) et le procédé de codage de parole à large bande (BSCV) ou à bande étroite (SSCV) est défini par le choix d'un ou de plusieurs modules.

11. Procédé selon l'une des revendications précédentes, dans lequel
le codeur/décodeur de parole (SC1, SC2) prévoit deux procédés de codage de parole à large bande (BSCV), le procédé de codage de parole à bande plus étroite des deux procédés de codage de parole (BSCV) étant limité au niveau de la fréquence de telle sorte que l'information vocale est transmise codée en PCM.

12. Système de radiocommunication pour la transmission d'information vocale,
avec des stations mobiles (MS), qui présentent un codeur/décodeur de parole (SC1),
avec au moins une unité de transcodage (TRAU), qui présente un codeur/décodeur de parole (SC2),
au moins l'un des codeurs/décodeurs de parole (SC1, SC2) étant conçu de telle sorte qu'au moins un procédé de codage de parole à bande large (BSCV) et un procédé de codage de parole à bande étroite (SSCV) peut être sélectionné,
avec un dispositif de commande (SE) pour le contrôle de conditions de transmission via une interface radio pour un canal de transmission entre les codeurs/décodeurs de parole (SC1, SC2),
avec des moyens pour la commutation en cas de conditions de transmission restreintes via l'interface radio pour au moins des parties du canal de transmission du procédé de codage de parole à large bande (BSCV) au procédé de codage de parole à bande étroite (SSCV),
**caractérisé par**
un dispositif pour l'extension de la largeur de bande (BE), qui élargit côté réception l'information vocale à bande étroite transmise de cette façon à une largeur de bande plus grande, et
des moyens pour la commutation retour du procédé de codage de parole à bande étroite (SSCV) au procédé de codage de parole à large bande (BSCV) et pour terminer l'extension de la largeur de bande côté réception.

13. Système de radiocommunication selon la revendication 12, dans lequel le dispositif pour l'extension de la largeur de bande (BE) est disposé dans la station mobile (MS) et/ou l'unité de transcodage (TRAU).

14. Système de radiocommunication selon la revendication 12 ou 13, dans lequel un filtre (F) est attribué au dispositif pour l'extension de largeur de bande (BE).
